(19) Europäisches Patentamt / European Patent Office / Office européen des brevets

(11) **EP 3 259 307 B1**

(12) **EUROPEAN PATENT SPECIFICATION**

(45) Date of publication and mention
of the grant of the patent:
**16.10.2019 Bulletin 2019/42**

(21) Application number: **16752081.6**

(22) Date of filing: **02.02.2016**

(51) Int Cl.:
**C08J 9/28** (2006.01)          **C08L 83/04** (2006.01)

(86) International application number:
**PCT/JP2016/000535**

(87) International publication number:
**WO 2016/132690 (25.08.2016 Gazette 2016/34)**

(54) **SPONGE-FORMABLE SILICONE RUBBER COMPOSITION AND SILICONE RUBBER SPONGE**

ZU EINEM SCHWAMM FORMBARE SILIKONKAUTSCHUKZUSAMMENSETZUNG UND
SILIKONKAUTSCHUKSCHWAMM

COMPOSITION DE CAOUTCHOUC DE SILICONE APTE À FORMER UNE ÉPONGE ET ÉPONGE
EN CAOUTCHOUC DE SILICONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2015 JP 2015027387**

(43) Date of publication of application:
**27.12.2017 Bulletin 2017/52**

(73) Proprietor: **Dow Toray Co., Ltd.
Tokyo (JP)**

(72) Inventor: **IRIE, Masakazu
Ichihara-shi
Chiba 299-0108 (JP)**

(74) Representative: **Murgitroyd & Company
Scotland House
165-169 Scotland Street
Glasgow G5 8PL (GB)**

(56) References cited:
WO-A1-2005/085357      WO-A1-2010/013847
JP-A- 2003 082 232       JP-A- 2006 225 422
JP-A- 2013 241 532       JP-A- 2014 051 550
US-A1- 2011 021 649

**Description**

[Technical Field]

The present invention relates to a sponge-formable silicone rubber composition, and to a silicone rubber sponge obtained by crosslinking of the composition by a hydrosilylation reaction.

[Background Art]

Due to having excellent heat resistance and weather resistance, being light-weight, and having low thermal conductivity, silicone rubber sponge is used in various seal materials such as packings, gaskets, and O-rings; rollers and belts of image forming devices such as copiers and printers; and automotive parts such as hood cushioning pads and engine vibration-proofing materials.

Silicone rubber compositions for forming such silicone rubber sponges that have been proposed include an emulsion composition for silicone rubber comprising a polydiorganosiloxane having at least two silicon-bonded alkenyl groups per molecule, a polyorganosiloxane having at least two silicon-bonded hydrogen atoms per molecule, water containing smectite clay, an emulsifier, and a platinum-based catalyst (see Patent Document 1); a silicone rubber sponge-formable composition comprising a liquid polyorganosiloxane having at least two silicon-bonded alkenyl groups per molecule, a liquid polyorganohydrogensiloxane having at least two silicon-bonded hydrogen atoms per molecule, a surfactant, an addition reaction catalyst, a reinforcing silica fine powder, and water (see Patent Document 2); and a sponge-formable liquid silicone rubber composition comprising a polydiorganosiloxane capped at both molecular terminals with alkenyl groups and not containing an alkenyl group in side molecular chains, a polydiorganosiloxane having at least two alkenyl groups in side molecular chains, a polyorganosiloxane having at least two silicon-bonded hydrogen atoms per molecule, a mixture of water and an inorganic thickening agent, an emulsifier, a hydrosilylation reaction catalyst, and a curing retarder (see Patent Document 3). A silicone rubber sponge can be formed by curing such a silicone rubber composition in a uniform emulsified state and then removing water from the obtained silicone rubber.

However, the silicone rubber sponge obtained in such a manner has the problems that fineness and uniformity of sponge bubbles are not sufficient, and distortion is large due to nonuniform contraction after secondary vulcanization for removing water.

On the other hand, blending a lithium salt is a known method for imparting antistatic capability to silicone rubber (see Patent Documents 4 and 5).

However, lithium salt is for imparting antistatic capability without reducing rubber properties and compression set, and is not for improving compression set of silicone rubber. In particular, it is not known to reduce distortion due to contraction after secondary vulcanization of a silicone rubber sponge.

[Citation List]

[Patent Literature]

Patent Document 1: Japanese Unexamined Patent Application Publication No. 2004-346248A
Patent Document 2: Japanese Unexamined Patent Application Publication No. 2005-062534A
Patent Document 3: Japanese Unexamined Patent Application Publication No. 2008-214625A
Patent Document 4: Japanese Unexamined Patent Application Publication No. 2006-265340A
Patent Document 5: Japanese Unexamined Patent Application Publication No. 2011-201951A

[Summary of Invention]

[Technical Problem]

An object of the present invention is to provide a sponge-formable silicone rubber composition that forms a silicone rubber sponge having uniform and fine bubbles and having small distortion due to contraction after secondary vulcanization, and such a silicone rubber sponge.

[Solution to Problem]

The sponge-formable silicone rubber composition of the present invention comprises:

(A) 100 parts by mass of a polyorganosiloxane having at least two silicon-bonded alkenyl groups per molecule;

(B) a polyorganosiloxane having at least two silicon-bonded hydrogen atoms per molecule, in an amount such that silicon-bonded hydrogen atoms in component (B) is from 0.4 to 20 moles per 1 mole of alkenyl groups in component (A);

(C) from 20 to 500 parts by mass of water;

(D) a thickening agent, in an amount of from 0.01 to 15 parts by mass per 100 parts by mass of component (C);

(E) from 0.1 to 15 parts by mass of an emulsifier;

(F) from 0.00001 to 2.0 parts by mass of a halogen-containing ion conductor of an alkali metal; and

(G) a hydrosilylation reaction catalyst, in an amount to accelerate a hydrosilylation reaction of the composition,

wherein component (F) is at least one type of ion conductor selected from the group consisting of $MBF_4$, $MClO_4$, $MPF_6$, $MAsF_6$, $MSbF_6$, $MSO_3CF_3$, $MN(SO_2CF_3)_2$, $MSO_3C_4F_9$, and $MC(SO_2CF_3)_3$, wherein M in the formulas is lithium or sodium.

The silicone rubber sponge of the present invention is obtained by crosslinking the composition by a hydrosilylation reaction and then removing water from the obtained silicone rubber, or removing water while crosslinking the composition by a hydrosilylation reaction.

Preferred embodiments of the invention are set forth in the dependent claims.

[Effect of Invention]

The sponge-formable silicone rubber composition of the present invention forms a silicone rubber sponge having uniform and fine bubbles and having small distortion due to contraction after secondary vulcanization. Furthermore, the silicone rubber sponge of the present invention has uniform and fine bubbles and having small distortion due to contraction after secondary vulcanization.

[Detailed Description of the Invention]

First, the sponge-formable silicone rubber composition of the present invention will be described in detail.

The polyorganosiloxane for component (A) is a base compound of the present composition and has at least two silicon-bonded alkenyl groups per molecule. Examples of the alkenyl groups in component (A) include alkenyl groups having from 2 to 8 carbons such as a vinyl group, an allyl group, an isopropenyl group, a butenyl group, an isobutenyl group, a pentenyl group, a hexenyl group, a heptenyl group, and an octenyl group, among which a vinyl group is preferred. The bonding position of the alkenyl groups may be a silicon atom at the end of the molecular chain and/or a silicon atom in the molecular chain, without limitation. The silicon atom at the end of the molecular chain is preferred. Furthermore, examples of silicon-bonded organic groups other than alkenyl groups in component (A) include alkyl groups having from 1 to 8 carbons such as a methyl group, an ethyl group, a propyl group, a butyl group, a pentyl group, a hexyl group, a heptyl group, and an octyl group; cycloalkyl groups having from 5 to 8 carbons such as a cyclopentyl group, a cyclohexyl group, a cycloheptyl group, and a cyclooctyl group; an aryl group having from 6 to 12 carbons such as a phenyl group, a tolyl group, a xylyl group, and a naphthyl group; an aralkyl having from 7 to 12 carbons such as a benzyl group and a phenethyl group; and monovalent hydrocarbon groups in which some or all of the hydrogen atoms in these monovalent hydrocarbon groups has been substituted with a halogen atom such as fluorine or chlorine. A methyl group or a phenyl group is preferred.

Examples of the molecular structure of component (A) include linear, partially branched linear, branched chain, cyclic, or resinoid, without limitation. Linear or partially branched linear is preferred. Component (A) is preferably a linear polyorganosiloxane capped at both molecular terminals with triorganosiloxy groups in which the main chain is composed of repeating diorganosiloxane units, of which the molecular structure may also be partially branched chain or cyclic.

Examples of such component (A) include dimethylpolysiloxanes capped at both molecular terminals with dimethylvinylsiloxy groups, dimethylpolysiloxanes capped at both molecular terminals with diphenylvinylsiloxy groups, dimethylsiloxane-methylphenylsiloxane copolymers capped at both molecular terminals with dimethylvinylsiloxy groups, dimethylsiloxane-diphenylsiloxane copolymers capped at both molecular terminals with dimethylvinylsiloxy groups, dimethylsiloxane-methylphenylsiloxane copolymers capped at both molecular terminals with diphenylvinylsiloxy groups, dimethylsiloxane-methylvinylsiloxane copolymers capped at both molecular terminals with dimethylvinylsiloxy groups, dimethylsiloxane-methylphenylsiloxane-methylvinylsiloxane copolymers capped at both molecular terminals with dimethylvinylsiloxy groups, dimethylsiloxane-diphenylsiloxane-methylvinylsiloxane copolymers capped at both molecular terminals with dimethylvinylsiloxy groups, methylvinylpolysiloxanes capped at both molecular terminals with trimethylsiloxy groups, methylvinylsiloxane-methylphenylsiloxane copolymers capped at both molecular terminals with trimethylsiloxy groups, methylvinylsiloxane-diphenylsiloxane copolymers capped at both molecular terminals with trimethylsiloxy groups, and dimethylsiloxane-methylvinylsiloxane copolymers capped at both molecular terminals with trimethylsiloxy groups. A combination of two or more polyorganosiloxanes having the above molecular structures may also be used as component (A).

The viscosity of component (A) is not limited, but viscosity at 25°C is preferably not less than 50 mPa· s or not less than 100 mPa· s, and not greater than 100,000 mPa· s. This is because if the viscosity of component (A) is not less than the aforementioned lower limit and not greater than the aforementioned upper limit, an emulsion of the obtained silicone rubber composition is stable and a silicone rubber sponge having uniform bubbles is readily obtained. Note that the viscosity at 25°C of this polyorganosiloxane may be measured by, for example, a B-type viscometer in conformance with JIS K7117-1.

The polyorganosiloxane for component (B) is a crosslinking agent of the present composition and has at least two silicon-bonded hydrogen atoms per molecule. The silicon-bonded hydrogen atoms in component (B) may be bonded to silicon atoms at the end of the molecular chain and/or silicon atoms in the molecular chain. Examples of the molecular structure of component (B) include linear, partially branched linear, branched chain, cyclic, or resinoid, without limitation. Linear or partially branched linear is preferred. Linear polyorganosiloxanes are preferred as component (B).

Examples of such component (B) include dimethylpolysiloxanes capped at both molecular terminals with dimethylhydrogensiloxy groups, dimethylsiloxane-methylphenylsiloxane copolymers capped at both molecular terminals with dimethylhydrogensiloxy groups, dimethylsiloxane-methylhydrogensiloxane copolymers capped at both molecular terminals with dimethylhydrogensiloxy groups, dimethylsiloxane-methylhydrogensiloxane copolymers capped at both molecular terminals with trimethylsiloxy groups, organopolysiloxanes composed of $H(CH_3)_2SiO_{1/2}$ units and $SiO_{4/2}$ units, and organopolysiloxanes composed of $H(CH_3)_2SiO_{1/2}$ units, $(CH_3)_3SiO_{1/2}$ units, and $SiO_{4/2}$ units.

The viscosity of component (B) is not limited, but kinetic viscosity at 25°C is preferably not less than 1 $mm^2/s$ and not greater than 1000 $mm^2/s$. Note that the kinetic viscosity at 25°C of this polyorganosiloxane may be measured by, for example, an Ubbelohde viscometer in conformance with JIS Z8803.

The content of component (B) is a quantity whereby the amount of silicon-bonded hydrogen atoms in this component is from 0.4 to 20 moles per 1 mole of alkenyl groups in component (A). Preferably, the lower limit thereof is a quantity resulting in 1.0 mole, a quantity resulting in 1.5 moles, or a quantity resulting in 1.8 moles, while the upper limit thereof is a quantity resulting in 10 moles or a quantity resulting in 5.0 moles. This is because if the content of component (B) is within the aforementioned range, the compression set of the obtained silicone rubber sponge is improved.

The water for component (C) is for making the silicone rubber porous by being removed from the silicone rubber after the present composition is crosslinked. The content of component (C) is in the range of 20 to 500 parts by mass per 100 parts by mass of component (A). Preferably, the lower limit thereof is 30 parts by mass, 40 parts by mass, or 50 parts by mass, while the upper limit thereof is 400 parts by mass, 300 parts by mass, or 200 parts by mass, per 100 parts by mass of component (A). This is because when the content of component (C) is not less than the lower limit of the aforementioned range, the obtained silicone rubber sponge tends to be porous and to have uniform bubbles, while when it is not greater than the upper limit of the aforementioned range, a silicone rubber sponge is easy to obtain.

The water for component (C) is not particularly limited, but tap water, well water, ion exchanged water, distilled water, or the like may be used. It is particularly preferred that component (C) be ion exchanged water from the perspective that dispersion in component (A) is stable.

The thickening agent for component (D) is for thickening the water of component (C), making it easy to disperse component (C) in component (A), stabilizing the dispersed state of component (C) in component (A), and making the obtained silicone rubber uniformly porous. Such component (D) is preferably at least one type selected from the group consisting of inorganic thickening agents, cellulose fibers, water-soluble polymers, water-absorbent polymers, hydrophilic composites composed of the above inorganic thickening agents and the above water-soluble polymers, and hydrophilic composites composed of the above inorganic thickening agents and the above water-absorbent polymers.

The inorganic thickening agents for component (D) are natural or synthetic inorganic thickening agents, examples of which include natural and synthetic smectite clays, such as bentonite containing a main component of clay minerals such as bentonite (montmorillonite), hectorite, saponite, sauconite, beidellite, and nontronite. Such smectite clays may be procured as the hydrothermal synthetic products Smecton (registered trademark of Kunimine Industries Co., Ltd.) and Lucentite (registered trademark of Co-Op Chemical Co., Ltd.), and the natural purified products Kunipia (registered trademark of Kunimine Industries Co., Ltd.), Bengel (registered trademark of Hojun Co., Ltd.), Bentone (trademark of Elementis PLC), and VEEGUM (trademark of Vanderbilt Minerals, LLC). This inorganic thickening agent is preferably bentonite (montmorillonite), hectorite, or saponite due to the fact that viscosity increases greatly when dispersed in water and the content of the emulsifier (E) can be reduced. The pH of these smectite clays is preferably in the range of 5.0 to 9.0 from the perspective of maintaining heat resistance of the silicone rubber sponge. Furthermore, a hydrophilic composite composed of such a smectite clay, and a water-absorbent polymer or a water-soluble polymer such as polyacrylic acid may also be used.

The cellulose fibers for component (D) are those that have been made into nanofibers by chemically or physically treating natural or synthetic cellulose fibers. From the perspectives of dispersibility, thickening properties, and the like, the number-average fiber diameter of such cellulose fibers is preferably in the range of 2 to 150 nm, in the range of 2 to 100 nm, or in the range of 2 to 10 nm. This is because when it is within the aforementioned range, the cellulose fibers do not readily settle when dispersed in water and can thicken while retaining fluidity.

The cellulose fibers for component (D) may be procured as an aqueous dispersion of cellulose nanofibers manufactured by Dai-ichi Kogyo Seiyaku Co., Ltd. (product name: Rheocrysta C-2SP).

Examples of the water-soluble polymer for component (D) include alginic acid, sodium alginate, carboxylate sodium salts, carboxycellulose sodium salts, methylcellulose, cellulose ethers, hydroxyethylcellulose, modified starch, polyvinyl alcohols, polacrylates, or polyacrylate sodium salts.

Furthermore, examples of the water-absorbent polymer for component (D) include polyacrylic acid salt crosslinked products and polyoxyalkylene-based water-absorbent resins.

The content of component (D) is in the range of 0.01 to 15 parts by mass per 100 parts by mass of component (C), and preferably, the lower limit thereof is 0.05 parts by mass or 0.1 parts by mass, while the upper limit thereof is 10 parts by mass or 5 parts by mass. This is because when the content of component (D) is not less than the lower limit of the aforementioned range, it can sufficiently thicken the water of component (C), and when not greater than the upper limit of the aforementioned range, it can stabilize emulsification of the silicone rubber composition.

The emulsifier for component (E) is for uniformly emulsifying the water in the silicone rubber composition and making the obtained silicone rubber uniformly porous. Examples of component (E) include anionic, cationic, amphoteric, and nonionic emulsifiers, and specifically, nonionic surfactants such as glycerin fatty acid esters, polyglycerin fatty acid esters, sorbitan fatty acid esters, sucrose fatty acid esters, polyethylene glycol fatty acid esters, polypropylene glycol fatty acid esters, polyoxyethylene glycerin fatty acid esters, polyoxyethylene sorbitan fatty acid esters, polyoxyethylene-polyoxypropylene block copolymers, polyoxyethylene alkyl ethers, polyoxyethylene alkyl phenyl ethers, and polyoxyethylene fatty acid amides; nonionic surfactants composed of polyorganosiloxanes such as polysiloxane-polyoxyethylene graft copolymers; cationic surfactants such as aliphatic amine salts, quaternary ammonium salts, and alkyl pyridinium salts; anionic surfactants such as higher fatty acid salts, higher alcohol sulfuric acid ester salts, alkylbenzene sulfonic acid salts, alkylnaphthalene sulfonic acid salts, and polyethylene glycol sulfuric acid ester salts; and amphoteric surfactants such as carboxybetaine-based and glycine-based surfactants. Nonionic emulsifiers are particularly preferred because they have little effect on crosslinking via the hydrosilylation reaction of the present composition.

These emulsifiers may be used as one type alone or in a combination of two or more types. The HLB value of the emulsifier (when a combination of two or more types of emulsifiers are used in combination, the weight-average HLB value thereof) is preferably not less than 1 and not greater than 10, not less than 1.5 and less than 6, or not less than 3.5 and less than 6.

The content of component (E) is in the range of 0.1 to 15 parts by mass per 100 parts by mass of component (A), and preferably, the lower limit thereof is 0.2 parts by mass, while the upper limit thereof is 10 parts by mass, 5 parts by mass, or 3 parts by mass. This is because when the content of component (E) is not less than the lower limit of the aforementioned range, component (C) can be uniformly dispersed in component (A), while on the other hand, when it is not greater than the upper limit of the aforementioned range, there is no effect on the mechanical characteristics or electrical characteristics of the obtained silicone rubber sponge.

The halogen-containing ion conductor of an alkali metal for component (F) is for reducing distortion due to contraction after secondary vulcanization of the silicone rubber sponge obtained by crosslinking the present composition. Such component (F) is preferably at least one type of ion conductor selected from the group consisting of $LiPF_6$, $LiN(SO_2CF_3)_2$, and $NaN(SO_2CF_3)_2$.

The content of component (F) is in the range of 0.00001 to 1.0 parts by mass per 100 parts by mass of component (A), and preferably, the lower limit thereof is 0.0001 parts by mass, while the upper limit thereof is 0.5 parts by mass. This is because when the content of component (F) is not less than the lower limit of the aforementioned range, the distortion after secondary vulcanization can be reduced, while when it is not greater than the upper limit of the aforementioned range, a silicone rubber sponge having uniform and fine bubbles can be formed without adversely affecting dispersibility of component (C) in component (A).

The hydrosilylation reaction catalyst for component (G) is a catalyst for hydrosilylation of the present composition. Examples include platinum-based catalysts such as chloroplatinic acid, alcohol-modified chloroplatinic acid, coordinate compounds of chloroplatinic acid with olefins, vinylsiloxanes, and acetylene compounds, and powder platinum-based catalysts in which they are dispersed in a thermoplastic resin; palladium-based catalysts such as tetrakis(triphenylphosphine)palladium; and rhodium-based catalysts such as chlorotris(triphenylphosphine)rhodium. Platinum-based catalysts are preferred.

The content of component (G) is a quantity that accelerates a hydrosilylation reaction of the present composition, and is preferably a quantity whereby the catalytic metal in component (G) is in the range of 0.01 to 500 ppm, or in the range of 0.1 to 100 ppm, relative to the total amount of components (A) and (B).

The present composition may further contain a hydrosilylation reaction inhibitor (H) for the purpose of adjusting the crosslinking speed and pot life of the present composition. Examples of component (H) include alkyne alcohols such as 3-methyl-1-butyn-3-ol, 3,5-dimethyl-1-hexyn-3-ol, 3-phenyl-1-butyn-3-ol, and 1-ethynyl-1-cyclohexanol; ene-yne compounds such as 3-methyl-3-penten-1-yne and 3,5-dimethyl-3-hexen-1-yne; alkenyl group-containing low molecular weight siloxanes such as tetramethyltetravinylcyclotetrasiloxane and tetramethyltetrahexenylcyclotetrasiloxane; and alkyne-containing silanes such as methyl-tris(1,1-dimethyl-2-butynoxy)silane and vinyl-tris(1,1-dimethyl-2-butynoxy)silane.

The content of component (H) in the present composition is selected as appropriate without limitation according to the usage method and molding method of the present composition, but is preferably within the range of 0.001 to 5 parts by mass relative to 100 parts by mass of component (A) because the crosslinking speed and pot life of the present composition can be sufficiently adjusted.

The present composition may further contain reinforcing silica fine powder (I) for the purpose of improving the mechanical strength of the obtained silicone rubber sponge. Examples of component (I) include fumed silica and precipitated silica. Furthermore, these silica fine powders may also be surface-treated with linear polyorganosiloxane, cyclic polyorganosiloxane, hexamethyldisilazane, various organosilanes, and the like. Additionally, the specific surface area of component (I) according to the BET adsorption method is preferably from 50 to 350 $m^2/g$ or from 80 to 250 $m^2/g$.

The content of component (I) is preferably not greater than 30 parts by mass, not greater than 20 parts by mass, not greater than 15 parts by mass, or not greater than 10 parts by mass, per 100 parts by mass of component (A). This is because when the content of component (I) is not greater than the upper limit of the aforementioned range, mechanical strength can be improved without losing uniformity and fineness of the obtained silicone rubber sponge.

The present composition may also contain an electrically conductive filler for the purpose of imparting electrical conductivity to the obtained silicone rubber sponge. Examples of the electrically conductive filler include carbon-based conductive agents such as carbon black, carbon fibers, carbon nanotubes, and graphite; metal powders such as gold, silver, and nickel; electrically conductive zinc oxide, electrically conductive titanium oxide, and electrically conductive aluminum oxide; electrically conductive fillers obtained by treating the surface of various fillers with electrically conductive coating such as metal plating treatment; and mixtures of two or more types thereof. This electrically conductive filler is preferably carbon black because good electrical conductivity is obtained by adding a small amount. Specific examples include acetylene black, conductive furnace black (CF), superconductive furnace black (SCF), extraconductive furnace black (XCF), conductive channel black (CC), and furnace black or channel black that has been heat treated at a high temperature of approximately 1500°C. The content of this electrically conductive filler is not limited, but is preferably not greater than 100 parts by mass or not greater than 70 parts by mass per 100 parts by mass of component (A) because a good sponge can be obtained.

As other optional components, the present composition may also contain reinforcing fillers other than silica, such as fumed titanium oxide; non-reinforcing fillers such as quartz powder, diatomaceous earth, aluminosilicate, iron oxide, zinc oxide, calcium carbonate, aluminum oxide, cerium oxide, mica, clay, and zinc carbonate; fillers obtained by surface-treating these fillers with organosilicon compounds such as organosilanes and polyorganosiloxanes; and preservatives, corrosion inhibitors, pigments, heat resistance agents, flame retardants, internal release agents, plasticizers, acid acceptors, and non-functional silicone oils, as long as the object of the present invention is not lost.

The present composition may be prepared by mixing components (A) through (G) and the other optional components as necessary. To prepare the present composition, a known kneading means such as homomixer, paddle mixer, homo-disper, colloid mill, or vacuum kneading and mixing machine may be used. Examples of methods for preparing the present composition include a method of loading component (A), component (B), component (C), component (D), component (E), and component (F) in a mixer, stirring to mix for a prescribed time, and mixing in component (G) immediately before use using a mixing apparatus such as, for example, a static mixer or dynamic mixer; a method of loading component (A), component (C), component (D), component (E), component (F), and component (G) in a mixer, stirring to mix for a prescribed time, and mixing in component (B) immediately before use using a mixing apparatus such as, for example, a static mixer or dynamic mixer; and a method of loading component (A), component (C), component (D), component (E), and component (F) in a mixer, stirring to mix for a prescribed time, and mixing in component (B) and component (G) immediately before use using a mixing apparatus such as, for example, a static mixer or dynamic mixer.

Furthermore, from the perspective of storage stability, when preparing the present composition, it is preferable to store it as a three-part sponge-formable silicone rubber composition composed of

part A: composition composed of component (A), component (C), component (D), component (E), component (F), and component (G), and not containing component (B);
part B: composition composed of component (A), component (C), component (D), and component (E), and not containing component (B) and component (G);
part C: composition composed of component (B), and not containing component (C), component (D), component (E), component (F), and component (G); or
a three-part sponge-formable silicone rubber composition composed of
part A': composition composed of component (A), component (G), and, as necessary, component (E), and not containing component (B), component (C), and component (D);

part B': composition composed of component (B), and, as necessary, component (E), and not containing component (C), component (D), and component (G);

part C': composition composed of component (C), component (D), and, as necessary, component (F), and not containing component (A), component (B), and component (G);

and to mix the three parts using a mixing apparatus such as, for example, a static mixer or dynamic mixer immediately before submitting to molding. Furthermore, it is preferable to store it as a two-part sponge-formable silicone rubber composition composed of

part A": composition composed of component (A), component (C), component (D), component (E), component (F), and component (G), and not containing component (B);

part B": composition composed of component (B), and not containing component (C), component (D), component (E), component (F), and component (G);

and to mix the two parts using a mixing apparatus such as, for example, a static mixer or dynamic mixer immediately before submitting to molding.

The silicone rubber sponge may be formed from the present composition by various methods. Specifically, after the present composition is uniformly emulsified, it is injected into the cavity of a mold for molding, and a silicone rubber molded body is molded in the water-containing state under pressure while holding the temperature at less than 100°C, preferably 50 to 90°C. It is then removed from the mold and submitted to secondary vulcanization at 120 to 250°C to remove the water from the silicone rubber molded body in the water-containing state, and a silicone rubber sponge having fine and uniform bubbles is thereby obtained. Furthermore, a string-like silicone rubber sponge may be produced by discharging the present composition from a nozzle into a rod shape and curing it by introducing it into hot water at a temperature of, for example 80 to 100°C, and then drying the cured product with hot air. Additionally, a silicone rubber sponge sheet may be formed by coating a releasable substrate such as a resin film with the present composition and curing it by heating to a temperature of, for example 50 to 120°C, and removing water by drying with hot air, or, curing while removing water by heating and then removing the releasable substrate. Alternatively, a silicone rubber sponge coated textile may be formed by coating a synthetic fiber textile or glass cloth with the present composition, curing it by heating to a temperature of, for example 50 to 120°C, and removing water by drying with hot air, or, curing while removing water by heating.

The silicone rubber sponge of the present invention will now be described in detail.

The silicone rubber sponge of the present invention is obtained by crosslinking the above-described sponge-formable silicone rubber composition by a hydrosilylation reaction and then removing water from the obtained silicone rubber, or removing water while crosslinking the composition by a hydrosilylation reaction.

The silicone rubber sponge of the present invention is useful as an elastic material of the fixing member of an image forming device. In the case of a fixing roller, there is a silicone rubber sponge layer on a core, but in this case, the material and the dimensions of the core and so forth may be selected as appropriate according to the type of roller. In the case of a fixing belt, there is a silicone rubber sponge layer on an endless belt, but in this case, the material and the dimensions of the endless belt and so forth may be selected as appropriate according to the type of belt.

Additionally, a fluoro resin layer or fluorine rubber layer may be further provided on the outer circumference of the silicone rubber sponge layer. In this case, the fluoro resin layer is formed of a fluoro resin coating material or a fluoro resin tube and coats the silicone rubber sponge layer. Examples of the fluoro resin coating material include latex of polytetrafluoroethylene resin (PTFE) and DAI-EL Latex (fluorine-based latex manufactured by Daikin Industries, Ltd.). Examples of the fluoro resin tube include polytetrafluoroethylene resin (PTFE), tetrafluoroethylene-perfluoroalkyl vinyl ether copolymer resin (PFA), ethylene fluoride-polypropylene copolymer resin (FEP), polyvinylidene fluoride resin (PVDF), and polyvinyl fluoride resin.

The thickness of the silicone rubber sponge layer is not limited but is preferably in the range of 0.05 to 80 mm or in the range of 0.1 to 50 mm because rubber elasticity is effectively utilized. The thickness of the fluoro resin or fluorine rubber layer formed on top of it is preferably in the range of 5 to 200 $\mu$m or in the range of 10 to 100 $\mu$m.

[Examples]

The sponge-formable silicone rubber composition and silicone rubber sponge of the present invention will be described in further detail through examples. Note that the viscosity in the examples is the value at 25°C. Furthermore, the characteristics of the silicone rubber sponge in the examples are the values measured as follows.

<Viscosity>

The viscosity at 25°C (mPa· s) of the polyorganosiloxane is the value measured by a B-type viscometer in conformance with JIS K7117-1, and the kinetic viscosity (mm$^2$/s) is the value measured by an Ubbelohde viscometer in conformance with JIS Z8803.

<Density>

The density was measured in conformance with JIS K6268.

<Hardness>

The hardness was measured using a test piece 6 mm thick in conformance with the test method using a C-type tester (Asker C durometer) set forth in JIS K7312.

<Tensile strength, elongation>

The tensile strength and elongation were measured in conformance with JIS K6251.

<Compression set>

The compression set was measured after 22 hours at 180°C and 25% compression in conformance with JIS K6262.

<Contraction rate>

The thickness of the center portion and the thickness of the end portion of a test piece for compression set measurement, which was molded using a mold having a cavity with a diameter of 29 mm and thickness of 12.8 mm, was measured and substituted into the following formula to determine the contraction rate.

[Math. 1]

$$\text{CONTRACTION RATE} = \frac{12.8 - \text{MEASURED VALUE (mm)}}{12.8} \times 100$$

<Preparation Example 1>

(Preparation of silica master batch)

100 parts by mass of polydimethylsiloxane capped at both molecular terminals with dimethylvinylsiloxy groups having a viscosity of 40,000 mPa· s, 50 parts by mass of fumed silica having a BET specific surface area of 400 m$^2$/g, 10 parts by mass of hexamethyldisilazane, 0.36 parts by mass of tetramethyldivinylsilazane, 2 parts by mass of water, and 0.26 parts by mass of dimethylsiloxane-methylvinylsiloxane copolymer capped at both molecular terminals with dimethylhydroxysiloxy groups having a viscosity of 20 mPa· s (vinyl group content approximately 10.9 mass%) were loaded in a Ross mixer, and after mixing until uniform at room temperature, it was kneaded while heating at 200°C under reduced pressure for 2 hours, to prepare a fluid silica master batch.

<Preparation Example 2>

(Preparation of aqueous dispersion thickened with inorganic thickening agent)

0.85 parts by mass of smectite clay (organic polymer composite hydrophilic purified bentonite manufactured by Hojun Co., Ltd.; pH 6.5) and 99.15 parts by mass of ion exchanged water were loaded in a homomixer and mixed at room temperature until uniform, to prepare an aqueous dispersion (c-1) thickened with an inorganic thickening agent.

<Preparation Example 3>

(Preparation of aqueous dispersion thickened with cellulose nanofibers)

10 parts by mass of a 2% aqueous dispersion of cellulose nanofibers (number-average fiber diameter 4 nm) (product name Rheocrysta C-2SP manufactured by Dai-ichi Kogyo Seiyaku Co., Ltd.) and 20 parts by mass of ion exchanged water were loaded in a homomixer and mixed at room temperature until uniform, to prepare an aqueous dispersion (c-2) thickened with cellulose nanofibers.

<Working Examples 1 to 10 and Comparative Examples 1 to 3>

The silica master batch, component (A), component (C), component (D), component (E), and component (F) were loaded into a homomixer (manufactured by Tokushu Kika Kogyo Co., Ltd.) in the compositions (parts by mass) listed in Tables 1 to 3, and mixed until uniform at 25°C. Then, component (B), component (G), and component (H) were mixed into the obtained mixture in the compositions (parts by mass) listed in Tables 1 to 3 and degassed to prepare sponge-formable silicone rubber compositions. Note that in Tables 1 to 3, SiH/V indicates the number of moles of silicon-bonded hydrogen atoms in the polyorganosiloxane equivalent to component (B) relative to 1 mole of vinyl groups in the polyorganosiloxane equivalent to component (A) in the silicone rubber composition.

The sponge-formable silicone rubber compositions prepared in this manner were crosslinked for 10 minutes at 90°C using a compression molding machine, to prepare various test pieces in the water-containing state. Next, these test pieces were left to stand in an open system for 4 hours at 200°C to remove the water in the test pieces, to produce silicone rubber sponge test pieces. Using these silicone rubber sponge test pieces, density, hardness, tensile strength, elongation, compression set, and contraction rate were measured. The results are shown in Tables 1 to 3.

Silica MB: Silica master batch prepared in Preparation Example 1 (fumed silica content approximately 31 mass%)
(a-1): Dimethylsiloxane-methylvinylsiloxane copolymer capped at both molecular terminals with trimethylsiloxy groups, having a viscosity of 10,000 mPa· s (vinyl group content 0.13 mass%)
(a-2): Dimethylsiloxane-methylvinylsiloxane copolymer capped at both molecular terminals with dimethylvinylsiloxy groups, having a viscosity of 350 mPa· s (vinyl group content approximately 1.17 mass%)
(b-1): Dimethylsiloxane-methylhydrogensiloxane copolymer capped at both molecular terminals with trimethylsiloxy groups, having a kinetic viscosity of 43.5 $mm^2$/s (silicon-bonded hydrogen atom content approximately 0.69 mass%)
(c-1): Aqueous dispersion thickened with inorganic thickening agent prepared in Preparation Example 2 (smectite clay content 0.85 mass%)
(c-2): Aqueous dispersion thickened with cellulose nanofibers prepared in Preparation Example 3 (cellulose nanofiber content 0.67 mass%)
(d-1): Nonionic surfactant (sorbitan fatty acid ester, product name Rheodol SP-O10V manufactured by Kao Corp.; HLB value 4.3)
(d-2): Nonionic surfactant (sorbitan fatty acid ester, product name Rheodol SP-O30V manufactured by Kao Corp.; HLB value 1.8)
(e-1): $LiN(SO_2CF_3)_2$
(e-2): $NaN(SO_2CF_3)_2$
(e-3): $LiPF_6$
(f-1): 1,3-divinyltetramethyldisiloxane solution of 1,3-divinyltetramethyldisiloxane complex of platinum (platinum metal content approximately 4000 ppm)
(g-1): Mixture of 2 parts by mass of ethynylcyclohexanol and 98 parts by mass of polydimethylsiloxane capped at both molecular terminals with dimethylvinylsiloxy groups having a viscosity of 10,000 mPa· s
Pigment MB: Mixture of 40 parts by mass of Bengara (product name Bayferrox manufactured by Bayer AG) and 60 parts by mass of polydimethylsiloxane capped at both molecular terminals with dimethylvinylsiloxy groups having a viscosity of 10,000 mPa· s

[Table 1]

| Item | Category | Working Example | | Comparative Example | |
|---|---|---|---|---|---|
| | | 1 | 2 | 1 | 2 |
| Composition of silicone rubber composition (parts by mass) | Silica MB | 43.9 | 43.9 | 43.9 | 43.9 |
| | (a-1) | 26.3 | 26.3 | 26.3 | 26.3 |
| | (a-2) | 43.4 | 43.4 | 43.4 | 43.4 |
| | (b-1) | 14.8 | 14.8 | 14.8 | 14.8 |
| | (c-1) | 136.4 | - | 136.4 | - |
| | (c-2) | - | 136.4 | - | 136.4 |
| | (d-1) | 1.03 | 1.03 | 1.03 | 1.03 |
| | (d-2) | 0.06 | 0.06 | 0.06 | 0.06 |
| | (e-1) | 0.13 | 0.13 | - | - |
| | (f-1) | 0.39 | 0.39 | 0.39 | 0.39 |
| | (g-1) | 0.38 | 0.38 | 0.38 | 0.38 |
| | Pigment MB | 5.5 | 5.5 | 5.5 | 5.5 |
| SiH/Vi | | 4.4 | 4.4 | 4.4 | 4.4 |
| Density (g/cm$^3$) | | 0.569 | 0.649 | 0.601 | 0.664 |
| Hardness | | 46 | 47 | 48 | 49 |
| Tensile strength (MPa) | | 0.9 | 1.3 | 1.3 | 1.4 |
| Elongation (%) | | 52 | 49 | 60 | 49 |
| Compression set (%) | | 26 | 49 | 38 | 43 |
| Contraction rate of center portion (%) | | 3.4 | 9.6 | 16.2 | 15.8 |
| Contraction rate of end portion (%) | | 3.4 | 8.4 | 8.3 | 7.1 |

[Table 2]

| Item | Category | Working Example | | | Comparative Example |
|---|---|---|---|---|---|
| | | 3 | 4 | 5 | 3 |
| Composition of silicone rubber composition (parts by mass) | Silica MB | 52.4 | 52.4 | 52.4 | 52.4 |
| | (a-1) | 14.0 | 14.0 | 14.0 | 14.0 |
| | (a-2) | 50.0 | 50.0 | 50.0 | 50.0 |
| | (b-1) | 14.6 | 14.6 | 14.6 | 14.6 |
| | (c-1) | 140.0 | 140.0 | 140.0 | 140.0 |
| | (d-1) | 1.1 | 1.1 | 1.1 | 1.1 |
| | (d-2) | 0.07 | 0.07 | 0.07 | 0.07 |
| | (e-1) | 0.13 | - | - | - |
| | (e-2) | - | 0.13 | - | - |
| | (e-3) | - | - | 0.13 | - |
| | (f-1) | 0.42 | 0.42 | 0.42 | 0.42 |
| | (g-1) | 0.41 | 0.41 | 0.41 | 0.41 |
| | Pigment MB | 5.8 | 5.8 | 5.8 | 5.8 |
| SiH/Vi | | 3.9 | 3.9 | 3.9 | 3.9 |
| Density (g/cm$^3$) | | 0.569 | 0.585 | 0.587 | 0.632 |
| Hardness | | 50 | 50 | 50 | 51 |
| Tensile strength (MPa) | | 1.3 | 1.3 | 1.2 | 1.5 |
| Elongation (%) | | 56 | 56 | 51 | 55 |
| Compression set (%) | | 20 | 29 | 31 | 37 |
| Contraction rate of center portion (%) | | 4.1 | 13.6 | 13.7 | 17.2 |
| Contraction rate of end portion (%) | | 3.9 | 7.2 | 6.8 | 8.4 |

[Table 3]

| Item | Category | Working Example | | | | |
|---|---|---|---|---|---|---|
| | | 6 | 7 | 8 | 9 | 10 |
| Composition of silicone rubber composition (parts by mass) | Silica MB | 52.4 | 52.4 | 52.4 | 52.4 | 52.4 |
| | (a-1) | 14.0 | 14.0 | 14.0 | 14.0 | 14.0 |
| | (a-2) | 50.0 | 50.0 | 50.0 | 50.0 | 50.0 |
| | (b-1) | 14.6 | 14.6 | 14.6 | 14.6 | 14.6 |
| | (c-1) | 140.0 | 140.0 | 140.0 | 140.0 | 140.0 |
| | (d-1) | 1.1 | 1.1 | 1.1 | 1.1 | 1.1 |
| | (d-2) | 0.07 | 0.07 | 0.07 | 0.07 | 0.07 |
| | (e-1) | 0.0002 | 0.004 | 0.04 | 0.26 | 0.39 |
| | (f-1) | 0.42 | 0.42 | 0.42 | 0.42 | 0.42 |
| | (g-1) | 0.41 | 0.41 | 0.41 | 0.41 | 0.41 |
| | Pigment MB | 5.8 | 5.8 | 5.8 | 5.8 | 5.8 |
| SiH/Vi | | 3.9 | 3.9 | 3.9 | 3.9 | 3.9 |
| Density (g/cm$^3$) | | 0.574 | 0.588 | 0.573 | 0.566 | 0.568 |
| Hardness | | 50 | 50 | 51 | 50 | 48 |
| Tensile strength (MPa) | | 1.1 | 1.3 | 1.1 | 1.3 | 1.2 |
| Elongation (%) | | 49 | 54 | 51 | 60 | 57 |
| Compression set (%) | | 27 | 26 | 23 | 20 | 26 |
| Contraction rate of center portion (%) | | 8.6 | 6.5 | 9.2 | 5.4 | 6.2 |
| Contraction rate of end portion (%) | | 7.4 | 6.5 | 7.2 | 6.0 | 6.1 |

[Industrial Applicability]

Since the sponge-formable silicone rubber composition of the present invention has excellent moldability and can form a silicone rubber sponge having a low contraction rate after molding and little distortion after secondary vulcanization, it is advantageously used in elastic materials of rollers and belts used in image forming devices such as electronic photographic copiers, laser printers, on-demand printers, and facsimile machines, and sponge applications used at high temperature such as thermal insulation materials, sound absorbing materials, cushioning, packing, gaskets, and pads.

**Claims**

1.   A sponge-formable silicone rubber composition comprising:

(A) 100 parts by mass of a polyorganosiloxane having at least two silicon-bonded alkenyl groups per molecule;
(B) a polyorganosiloxane having at least two silicon-bonded hydrogen atoms per molecule, in an amount such that an amount of silicon-bonded hydrogen atoms in component (B) is from 0.4 to 20 moles per 1 mole of alkenyl groups in component (A);
(C) from 20 to 500 parts by mass of water;
(D) a thickening agent, in an amount of from 0.01 to 15 parts by mass per 100 parts by mass of component (C);
(E) from 0.1 to 15 parts by mass of an emulsifier;
(F) from 0.00001 to 2.0 parts by mass of a halogen-containing ion conductor of an alkali metal; and
(G) a hydrosilylation reaction catalyst, in an amount to accelerate a hydrosilylation reaction of the composition,

wherein component (F) is at least one type of ion conductor selected from the group consisting of $MBF_4$, $MClO_4$, $MPF_6$, $MAsF_6$, $MSbF_6$, $MSO_3CF_3$, $MN(SO_2CF_3)_2$, $MSO_3C_4F_9$, and $MC(SO_2CF_3)_3$, wherein M in the formulas is lithium or sodium.

2. The sponge-formable silicone rubber composition according to claim 1, wherein component (D) is at least one type of thickening agent selected from the group consisting of inorganic thickening agents, cellulose fibers, water-soluble polymers, water-absorbent polymers, hydrophilic composites composed of the inorganic thickening agents and the water-soluble polymers, and hydrophilic composites composed of the inorganic thickening agents and the water-absorbent polymers.

3. The sponge-formable silicone rubber composition according to claim 2, wherein the inorganic thickening agent for component (D) is smectite clay.

4. The sponge-formable silicone rubber composition according to any one of claims 1 to 3, wherein the component (F) is at least one type of ion conductor selected from the group consisting of $LiPF_6$, $LiN(SO_2CF_3)_2$, and $NaN(SO_2CF_3)_2$.

5. The sponge-formable silicone rubber composition according to any one of claims 1 to 4, further comprising (H) from 0.001 to 5 parts by mass of a hydrosilylation reaction inhibitor.

6. The sponge-formable silicone rubber composition according to any one of claims 1 to 5, further comprising (I) not greater than 30 parts by mass of a reinforcing silica fine powder.

7. A silicone rubber sponge obtainable by crosslinking the sponge-formable silicone rubber composition described in any one of claims 1 to 6 by a hydrosilylation reaction and then removing water from the obtained silicone rubber, or removing water while crosslinking the composition by a hydrosilylation reaction.

8. The silicone rubber sponge according to claim 7, wherein the sponge is a silicone rubber sponge suitable for a fixing member for an image forming device.


**Patentansprüche**

1. Eine zu einem Schwamm formbare Silikonkautschukzusammensetzung, die Folgendes beinhaltet:

(A) 100 Massenteile eines Polyorganosiloxans mit mindestens zwei siliciumgebundenen Alkenylgruppen pro Molekül;
(B) ein Polyorganosiloxan mit mindestens zwei siliciumgebundenen Wasserstoffatomen pro Molekül in einer solchen Menge, dass eine Menge der siliciumgebundenen Wasserstoffatome in Komponente (B) 0,4 bis 20 Mole pro 1 Mol Alkenylgruppen in Komponente (A) beträgt;
(C) 20 bis 500 Massenteile Wasser;
(D) ein Verdickungsmittel in einer Menge von 0,01 bis 15 Massenteilen pro 100 Massenteile von Komponente (C);
(E) 0,1 bis 15 Massenteile eines Emulgators;
(F) 0,00001 bis 2,0 Massenteile eines halogenhaltigen Ionenleiters aus einem Alkalimetall; und
(G) einen Hydrosilylierungsreaktionskatalysator in einer Menge, um eine Hydrosilylierungsreaktion der Zusammensetzung zu beschleunigen,

wobei Komponente (F) mindestens ein Typ von Ionenleiter ist, ausgewählt aus der Gruppe, die aus Folgendem besteht: $MBF_4$, $MClO_4$, $MPF_6$, $MAsF_6$, $MSbF_6$, $MSO_3CF_3$, $MN(SO_2CF_3)_2$, $MSO_3C_4F_9$ und $MC(SO_2CF_3)_3$, wobei M in den Formeln Lithium oder Natrium ist.

2. Zu einem Schwamm formbare Silikonkautschukzusammensetzung gemäß Anspruch 1, wobei Komponente (D) mindestens ein Typ von Verdickungsmittel ist, ausgewählt aus der Gruppe, die aus Folgendem besteht: anorganischen Verdickungsmitteln, Cellulosefasern, wasserlöslichen Polymeren, wasserabsorbierenden Polymeren, hydrophilen Verbundstoffen, die aus den anorganischen Verdickungsmitteln und den wasserlöslichen Polymeren zusammengesetzt sind, und hydrophilen Verbundstoffen, die aus den anorganischen Verdickungsmitteln und den wasserabsorbierenden Polymeren zusammengesetzt sind.

3. Zu einem Schwamm formbare Silikonkautschukzusammensetzung gemäß Anspruch 2, wobei das anorganische Verdickungsmittel für Komponente (D) Smektitton ist.

4. Zu einem Schwamm formbare Silikonkautschukzusammensetzung gemäß einem der Ansprüche 1 bis 3, wobei die

**EP 3 259 307 B1**

Komponente (F) mindestens ein Typ von Ionenleiter ist, ausgewählt aus der Gruppe, die aus Folgendem besteht: LiPF$_6$, LiN(SO$_2$CF$_3$)$_2$ und NaN(SO$_2$CF$_3$)$_2$.

5. Zu einem Schwamm formbare Silikonkautschukzusammensetzung gemäß einem der Ansprüche 1 bis 4, ferner beinhaltend (H) 0,001 bis 5 Massenteile eines Hydrosilylierungsreaktionsinhibitors.

6. Zu einem Schwamm formbare Silikonkautschukzusammensetzung gemäß einem der Ansprüche 1 bis 5, ferner beinhaltend (I) nicht mehr als 30 Massenteile eines verstärkenden feinen Siliciumdioxidpulvers.

7. Ein Silikonkautschukschwamm, der durch Vernetzen der in einem der Ansprüche 1 bis 6 beschriebenen zu einem Schwamm formbaren Silikonkautschukzusammensetzung durch eine Hydrosilylierungsreaktion und dann Entfernen von Wasser aus dem erhaltenen Silikonkautschuk oder Entfernen von Wasser während des Vernetzens der Zusammensetzung durch eine Hydrosilylierungsreaktion erhalten werden kann.

8. Silikonkautschukschwamm gemäß Anspruch 7, wobei der Schwamm ein Silikonkautschukschwamm ist, der für ein Fixierungselement für eine Bilderzeugungsvorrichtung geeignet ist.

**Revendications**

1. Une composition de caoutchouc de silicone apte à former une éponge comprenant :

   (A) 100 parties en masse d'un polyorganosiloxane ayant au moins deux groupes alcényle à liaison silicium par molécule ;
   (B) un polyorganosiloxane ayant au moins deux atomes d'hydrogène à liaison silicium par molécule, en une quantité telle qu'une quantité d'atomes d'hydrogène à liaison silicium dans le composant (B) va de 0,4 à 20 moles pour 1 mole de groupes alcényle dans le composant (A) ;
   (C) de 20 à 500 parties en masse d'eau ;
   (D) un agent épaississant, en une quantité allant de 0,01 à 15 parties en masse pour 100 parties en masse de composant (C) ;
   (E) de 0,1 à 15 parties en masse d'un émulsifiant ;
   (F) de 0,00001 à 2,0 parties en masse d'un conducteur ionique halogéné d'un métal alcalin ; et
   (G) un catalyseur de réaction d'hydrosilylation, en une quantité permettant d'accélérer une réaction d'hydrosilylation de la composition,

   dans laquelle le composant (F) est au moins un type de conducteur ionique choisi dans le groupe constitué de MBF$_4$, de MClO$_4$, de MPF$_6$, de MAsF$_6$, de MSbF$_6$, de MSO$_3$CF$_3$, de MN(SO$_2$CF$_3$)$_2$, de MSO$_3$C$_4$F$_9$, et de MC(SO$_2$CF$_3$)$_3$, M étant dans les formules le lithium ou le sodium.

2. La composition de caoutchouc de silicone apte à former une éponge conformément à la revendication 1, dans laquelle le composant (D) est au moins un type d'agent épaississant choisi dans le groupe constitué d'agents épaississants inorganiques, de fibres de cellulose, de polymères hydrosolubles, de polymères absorbant l'eau, de composites hydrophiles composés des agents épaississants inorganiques et des polymères hydrosolubles, et de composites hydrophiles composés des agents épaississants inorganiques et des polymères absorbant l'eau.

3. La composition de caoutchouc de silicone apte à former une éponge conformément à la revendication 2, dans laquelle l'agent épaississant inorganique pour le composant (D) est de l'argile smectique.

4. La composition de caoutchouc de silicone apte à former une éponge conformément à l'une quelconque des revendications 1 à 3, dans laquelle le composant (F) est au moins un type de conducteur ionique choisi dans le groupe constitué de LiPF$_6$, de LiN(SO$_2$CF$_3$)$_2$, et de NaN(SO$_2$CF$_3$)$_2$.

5. La composition de caoutchouc de silicone apte à former une éponge conformément à l'une quelconque des revendications 1 à 4, comprenant en outre (H) de 0,001 à 5 parties en masse d'un inhibiteur de réaction d'hydrosilylation.

6. La composition de caoutchouc de silicone apte à former une éponge conformément à l'une quelconque des revendications 1 à 5, comprenant en outre (I) pas plus de 30 parties en masse d'une poudre fine de silice de renfort.

14

**7.** Une éponge de caoutchouc de silicone pouvant être obtenue par réticulation de la composition de caoutchouc de silicone apte à former une éponge décrite dans l'une quelconque des revendications 1 à 6 au moyen d'une réaction d'hydrosilylation et ensuite élimination d'eau du caoutchouc de silicone obtenu, ou élimination d'eau pendant la réticulation de la composition au moyen d'une réaction d'hydrosilylation.

**8.** L'éponge de caoutchouc de silicone conformément à la revendication 7, l'éponge étant une éponge de caoutchouc de silicone convenant pour un élément de fixation destiné à un dispositif de formation d'image.

**EP 3 259 307 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004346248 A
- JP 2005062534 A
- JP 2008214625 A

- JP 2006265340 A
- JP 2011201951 A